# EUROPEAN PATENT SPECIFICATION

(11) **EP 2 429 247 B1**
(45) Date of publication and mention of the grant of the patent: **24.12.2014**
(21) Application number: 10290477.8
(22) Date of filing: 06.09.2010
(51) Int. Cl.: H04W 52/28

(54) **Method for operating a wireless communication network, base station of a wireless communication network, terminal of a wireless communication network and wireless communication network**
Verfahren für den Betrieb eines drahtlosen Kommunikationsnetzwerks, Basisstation eines drahtlosen Kommunikationsnetzwerks, Endgerät eines drahtlosen Kommunikationsnetzwerks und drahtloses Kommunikationsnetzwerk
Procédé de fonctionnement d'un réseau de communication sans fil, station de base d'un réseau de communication sans fil, terminal d'un réseau de communication sans fil et réseau de communication sans fil

(43) Date of publication of application: 14.03.2012
(73) Proprietor: ALCATEL LUCENT, 92100 Boulogne-Billancourt (FR)
(72) Inventor: Hofmann, Dirk, 74321 Bietigheim-Bissingen (DE); Wild, Thorsten, 70435 Stuttgart (DE)
(74) Representative: Wetzel, Emmanuelle

(56) References cited:
- EP-A1- 1 041 848
- DE-C1- 19 744 263
- GB-A- 2 353 672

## Description

### Field of the invention

The present invention refers to a method for operating a wireless communication network, the method comprising transmitting a control message to a terminal of the network in order to change an operating mode of the terminal. Furthermore, the present invention refers to a base station of such a wireless communication network and to a terminal of such a wireless communication network.

### State of the art

A method for controlling a mobile terminal comprising remotely deactivating the terminal is known in the art. In particular, it is known to use a cell broadcast mechanism in order to convoy a request to a mobile terminal for deactivating the terminal.

When implementing the known method, terminals can be rather easily be deactivated in case of theft of the terminal or for load control within a coverage area of a radio cell. However, once the terminal has been remotely deactivated, it must be manually reactivated.

The published patent application GB 2 353 672 A discloses a radio terminal and a method for controlling the radio terminal. According to this method, a command is transmitted to the terminal in order to inhibit or reduce a transmission power of the terminal.

The published patent application EP 1 041 848 A1 discloses a method for protecting a predetermined area from disturbing usage of mobile terminals by means of a paging message.

The patent DE 197 44 262 C1 discloses a method for deactivating functions of an electronic device by transmitting deactivation commands to the device.

### Summary

An object of the present invention is to provide a method, a base station and a terminal allowing for automatically control the operating mode of a terminal of a mobile communication network. This object is solved by a method according to claim 1, a base station according to claim 6, a terminal according to claim 7, and a wireless communication network according to claim 8.

In an embodiment, a method for operating a wireless communication network is provided, the method comprising transmitting a control message to a terminal of the network in order to change an operating mode of the terminal from an unrestricted operating mode to a restricted operating mode, in said restricted operating mode a transmit power of at least one transmitter of the terminal is reduced compared to the transmit power in said unrestricted operating mode, wherein transmitting the control message comprises communicating time information to the terminal indicating to the terminal when to change to the unrestricted operating mode. Instead of instructing the terminal to remain in the restricted operating mode for an unspecified time period, the method indicates to the terminal to go to the restricted operating mode and eventually change back to the unrestricted operating mode. As a consequence, the terminal is controlled so as to automatically change between the operating modes. For the changes between the operating modes no user interaction is required. The restricted operating mode is for example a so-called flight mode of a smartphone offering functions of a mobile and a Personal Digital Assistant (PDA). The flight mode suspends many of the terminal's signal transmitting functions and thereby disables the terminal's capacity to place or receive calls or text messages while still permitting use of other functions that do not require signal transmission such as games, built-in camera, MP3 player.

The control message may comprise a time information field that indicates an absolute time when to change to the unrestricted operating mode and/or a time interval beginning at the transmission of the control message or a change to the restricted operating mode and ending at a point in time when the terminal shall change to the unrestricted operating mode.

Preferably, transmitting the control message comprises indicating to the terminal to deactivate the transmitter. By deactivating the transmitter undesired electromagnetic radiation can be avoided. For instance, the control message may be sent to terminals residing in areas where electromagnetic radiation is undesired, such as in hospitals. Because the terminal can not communicate with the network anymore after the transmitter has been deactivated. A time interval during which the terminal remains in the restricted operating mode is limited by the time information so that a terminal returns automatically to the unrestricted operating mode. If the terminal is still residing in the area where electromagnetic radiation is not desired then it will receive a further control message and go back to the restricted operating mode for a certain time interval again. If the terminal has left the area where electromagnetic radiation is not desired then it will not receive a control message after it has changed back to the unrestricted operating mode and remain in the unrestricted operating mode.

In an embodiment, transmitting the control message comprises indicating to the terminal to deactivate a transmitter configured for communicating via a specific radio access technology indicated in the control message. To this end, the control message may comprise at least one radio technology specific deactivation field indicating a radio technology. Transceivers using the indicated radio technologies shall be deactivated. A radio technology may be a cellular technology, such as GSM, UMTS and/or LTE. Furthermore, radio technology may be local wireless systems such as wireless LAN, and personal area networks such as Bluetooth. In areas, where electromagnetic radiation is generally undesired but can be tolerated to a certain extent the terminal may be instructed to use only those radio technologies that have low electromagnetic radiation such as WLAN and Bluetooth that use a comparatively low transmission power. Furthermore, communication can be restricted to local communications, which may be useful in prisons to prevent inmates of the prison from communicating with people outside the prison.

Preferably, transmitting the control message comprises indicating to the terminal to limit a transmission power of a transmitter of the least one transceiver to an upper power limit indicated in the control message. To this end, the control message may comprise a power limit field indicating the upper power limit. This allows for restricting the electromagnetic radiation even when using radio access technologies that have a comparatively high maximum transmission power.

Furthermore, advantageously, transmitting the control message comprises indicating to the terminal to limit the transmission power of a transmitter configured for communicating via a specific radio access technology to a radio technology specific upper power limit. The control message may comprise multiple radio access technology specific upper power limit fields, each of them indicating the upper power limit specific for one radio access technology. By using radio access technologies specific upper power limits a fine-grained limitation of electromagnetic radiation can be achieved. For example, in areas where electromagnetic radiations of unlicensed frequency ranges (e.g. frequency ranges used for WLAN, Bluetooth, or similar radio technologies) caused by mobile phones tends to disturb an additional communication system used for different purposes the upper power limit for these radio technologies may be limited so that interference between the wireless communication network and the additional communication system is reduced.

In an embodiment, transmitting the control message comprises indicating to the terminal whether to deactivate a receiver of the terminal. To this end the control message may comprise at lest one receiver deactivation field indicating to deactivate the receiver. In an embodiment, the control message comprises one or more technology specific receiver deactivation fields each of them indicating to deactivate a receiver of a certain radio transmission technology. Because reliable data transmission over the wireless communication network is not possible after a transmitter has been deactivated the corresponding receiver, i.e. the receiver belonging to the same transceiver, may be deactivated to in order to reduce the power consumption of the terminal.

In an embodiment, the control message is originating from a base station of the network and transmitted by the base station. In other words, the base station not only forwards the control message generated by a different component of the network but also generates the message by itself without relying on that different component. Therefore, no additional components of the network are required for implementing the method and no transmission resource besides a radio link between the base station and the terminal are required. In particular, the method provides location-dependent control of the terminal because the control message is received only by those terminals residing within the coverage area of the base station. For instance, a base station located nearby a hospital or a prison where electromagnetic radiation shall be limited and/or wide area communications shall be prevented may send control messages in order to instruct the terminals to switch to the restricted operating mode. Only the terminals residing within the coverage area of these base stations will enter the restricted operating mode, whereas terminals residing within the coverage area of different base station will remain in the unrestricted operation mode.

Preferably, the control message is transmitted by multicasting or by broadcasting and destined to multiple or all terminals reachable by the base station. Using multicast or broadcast reduces the load on the radio link caused by the transmission of the control message. In another embodiment at least a part of the transmitted control messages is transmitted by unicasting.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

According to another embodiment of the present invention, a base station of a wireless communication network is provided, cf. claim 6. When implementing such a base station, the advantages of the above-described method can be realized.

In an embodiment, control circuitry of the base station is arranged for executing the method described above.

According to yet another embodiment a terminal of a wireless communication network is provided, cf. claim 7. Such a terminal allows for realizing the advantages of the above-described method.

In an embodiment, the terminal comprises multiple transmitters, each of them being configured for communicating via a specific radio access technology, and wherein the terminal is arranged for limiting a transmission power of a set of the transmitters depending on the content of the control message. This terminal can be precisely controlled by the base station. Upper transmission power limits can be specified for each access technology so that the transmission power of a certain access technology may be reduced. Furthermore, a transmitter for transmitting via a specific access technology can be deactivated completely by reducing the upper transmission power limit to zero.

The base station and the terminal may be used in a wireless communication network, preferably in a cellular network such as GSM, UMTS or LTE. They are interrelated to each other because they interact with each other in order to make the terminal change between the operating modes.

According to yet another embodiment of the present invention, a wireless communication network, preferably a cellular communication network, is provided the network comprising a base station comprising a transmitter for transmitting a control message to a terminal of the network in order to change an operating mode of the terminal from an unrestricted operating mode to a restricted operating mode, in said restricted operating mode a transmit power of at least one transmitter of the terminal is reduced compared to the transmit power in said unrestricted operating mode, wherein the base station is the base station according to the present invention, embodiments of which are described above, and the terminal is a terminal according to the present invention, embodiments of which are described above.

### Brief description of the figures

Preferred embodiments and further advantages of the present inventions are shown in the figures and are described in detail hereinafter.
- Figure 1: shows a wireless communication network according to a first embodiment;
- Figure 2: shows a flow chart of a method for operating the wireless communication network shown in Figure 1;
- Figure 3: shows a format of a control message transmitted by a base station of the wireless network; and
- Figure 4: shows a format of the control message according to a second embodiment.

### Description of the embodiments

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

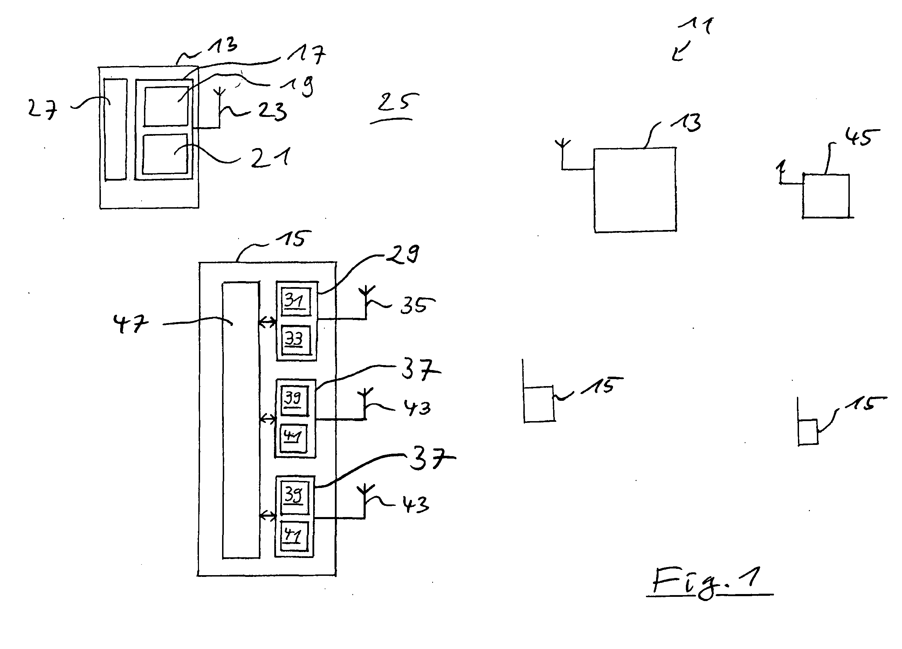

Figure 1 shows a wireless communication network 11 having base stations 13 and mobile terminals 15. In the shown embodiment, the wireless communication network 11 is a cellular network. Each base station 13 is assigned to at least one cell of the cellular network 11. At least one base station 13 may be a Base Transceiver Station (BTS) of the Global System of Mobile Communications (GSM), a NodeB of the Universal Mobile Telecommunications System (UMTS) or an enhanced NodeB (eNodeB) of a Long Term Evolution (LTE) radio access network. At least one terminal 15 may be a GSM, UMTS and/or LTE terminal. In another embodiment, the wireless communication network 11 is a wireless local area network (WLAN), the base stations 13 corresponding to access points of the WLAN.

Each base station 13 comprises a first transceiver 17 having a first transmitter 19 and a first receiver 21. The first receiver 17 is connected to a first antenna 23 of the base station 13. In addition, the first antenna 23 is coupled with both the first transmitter 19 and the first receiver 21 in such a way that the first transmitter 19 can transmit a radio signal to a cell 25 of the network 11 and the first receiver 21 can receive a radio signal from the cell 25.

The base station 13 comprises first control circuitry 27 for controlling the base station 13, in particular the first transceiver 17. The first control circuitry 27 may comprise a processor programmed for executing a method for operating the base station 13.

The base stations 13 are connected by means of a backhaul link (e. g. wire, optical fiber, or a backhaul radio link) to a backhaul network of the wireless communication network 11, such as a fixed part of the wireless communication network 11 (not shown).

Each terminal 15 comprises a second transceiver 29 having a second transmitter 31 and a second receiver 33. The second transmitter 31 and the second receiver 33 are coupled with a second antenna 35 in such a way that the second transmitter 31 can transmit a radio signal to the cell 25 and the second receiver 33 can receive a radio signal from the cell 25.

In the shown embodiment, at least one of the terminals 15 has one or more further transceivers 37, each of them having a further transmitter 39 and a further receiver 41. The further transmitter 39 and the further receiver 41 are coupled to a further antenna 43 such that the further transmitter 39 can transmit a further radio signal and the further receiver 41 can receive a further radio signal.

The further transceivers 37 are arranged for communicating via an additional radio access system or radio access technology, such as a wireless local area network (WLAN) or a personal area network (PAN) such like Bluetooth. For instance, one of the further transceivers 37 may be arranged to communicate with a WLAN access point 45. The access point 45 may be connected to a fixed local area network (not shown).

However, the present invention is not limited to terminals 15 having multiple transceivers 29, 37. The present invention can also be applied in a network 11 with terminals 15 having the second transceiver 29 only.

Each of the terminals 15 comprises second control circuitry 47 arranged for controlling the terminal 15. The second control circuitry 47 may comprise a processor programmed to execute a method for operating the terminal 15.

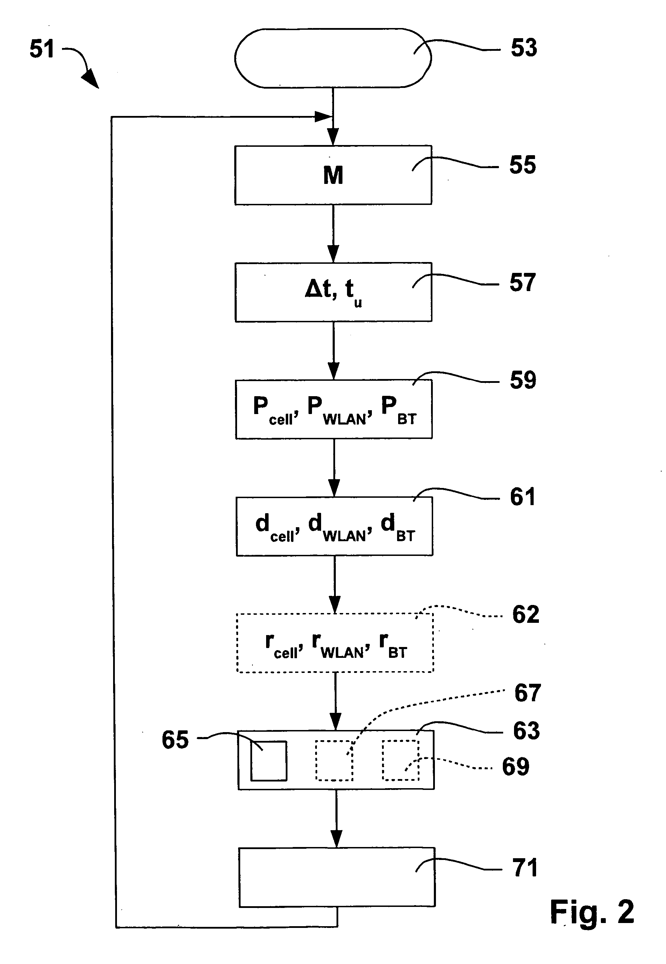

Figure 2 shows a flow chart of a method 51 for operating the wireless communication network 11. The method may be executed by at least one of the base station 13. To this end, the first control circuitry 27 may be arranged for executing the method 51. In particular, the processor of the first control circuitry 27 may be programmed for executing the method 51.

After a start 53, the method 51 executes a step 55 during which the control circuitry 27 generates a control message M to be sent to at least one terminal 15. To this end the processor of the first control circuitry 27 may allocate memory for storing the control message M. This control message M serves to instruct at least one terminal 15 to change from an unrestricted operating mode to a restricted operating mode. In the restricted operating mode a maximum transmission power used by the second transmitter 31 and/or the further transmitter 39 to transmit a radio signal is limited or the second transmitter 31 and/or the further transmitter 39 are completely deactivated.

After the step 55 has been a completed, a step 57 is executed during which the control circuitry 27 determines time information that instruct the terminal 15 when to change back to the unrestricted operating mode. By using the time information the base station 13 may make the terminal 15 temporally go to the restricted operating mode, a duration of a time interval during which the terminal 15 stays in the restricted operating mode being specified by the time information.

In an embodiment, the time information comprises a time interval Δt beginning at an event and ending at a point in time when the terminal 15 shall return to the unrestricted operating mode. The event may correspond to the reception of the control message M by the second transceiver 29 of the terminal 15 or the change from the unrestricted operating mode to the restricted operating mode. In another embodiment, the time information comprises an absolute time tᵤ indicating a point in time related to a predefined time basis. The absolute time information tᵤ may comprise a time of day and/or a date for indicating the instance when the terminal shall return to the unrestricted operating mode. The second control circuitry 47 of the terminal 15 may comprise a clock, which is synchronized to the time basis, e.g., the time of day and/or the date.

After step 57 a step 59 is executed. In step 59, the base station 13 determines for each access technology an upper power limit to limit a transmission power of the second transmitter 31 and/or the further transmitters 39 of the terminal 15. For example, the upper power limit P_{cell} for the cellular network 11 may be determined to limit the transmission power of the second transmitter 39. Furthermore, an upper transmission power limit P_{WLAN} for transmission of a WLAN signal by one of the further transmitters 39 and/or a upper power limit P_{BT} for transmitting a Bluetooth signal by one of the further transmitters 39 may be determined. In further embodiments, additional upper power limits are determined to limit the transmission power of transmissions using additional radio technologies. One of, several of or all the upper power limits P_{cell}, P_{WLAN}, P_{BT} may be included in the control message M.

Then in a step 61, deactivation information is generated, preferably deactivation bits d_{cell}, d_{WLAN}, d_{BT} indicating whether a transmitter 31, 39 of a specific radio technology shall be completely deactivated when the terminal 15 is in the restricted operating mode. One of, several of or all these deactivation bits d_{cell}, d_{WLAN}, d_{BT} may be included in the control message M.

In an embodiment, the step 59 is omitted, in another embodiment the step 61 is omitted. In particular, in the embodiment that has step 59 but not step 61, the terminal 15 may be instructed to deactivate one of its transmitters 31, 39 by setting the upper power limits P_{cell}, P_{WLAN}, P_{BT} to zero or to a very low value.

The method may comprise a step 62 for generating receiver deactivation information, preferably receiver deactivation bits r_{cell}, r_{WLAN}, r_{BT} indicating whether a receiver 33, 41 of a specific radio technology shall be deactivated while the terminal 15 is in the restricted operating mode.

In a step 63 following step 62, the base station 13 transmits the control message M to the terminals 15. The step 63 may comprise a step 65 for broadcasting the control message M to all terminals 15 within a coverage area of the base station 13, i.e. the cell 25. The step 63 may comprise a step 67 for transmitting the control message M using multicast communication from the base station 13 to a multicast group of multiple terminals 15. Furthermore, the step 63 may comprise a step 69 for transmitting the control message M to one certain terminal 15 (unicast). Using broadcast (step 65) allows for efficiently transmitting the control message to as many terminals 15 as possible and controlling the terminals 15 simultaneously. Using multicast (step 67) allows for control different groups of terminals 15 in a different way. Using a unicast transmission (69) allows for controlling each terminal 15 separately.

After the step 63 has been completed a further step 71 may be performed that waits for predefined time interval and then branches back to step 55. Step 71 allows for transmitting the control message m at least essentially periodically. Preferably, the control message M may be repeated within a time range of 1 to 10 seconds for avoiding to be fooled by a user of the terminal trying to switch off and switch on the terminal to obtain an unrestricted operating mode by a new initialization of the terminal.

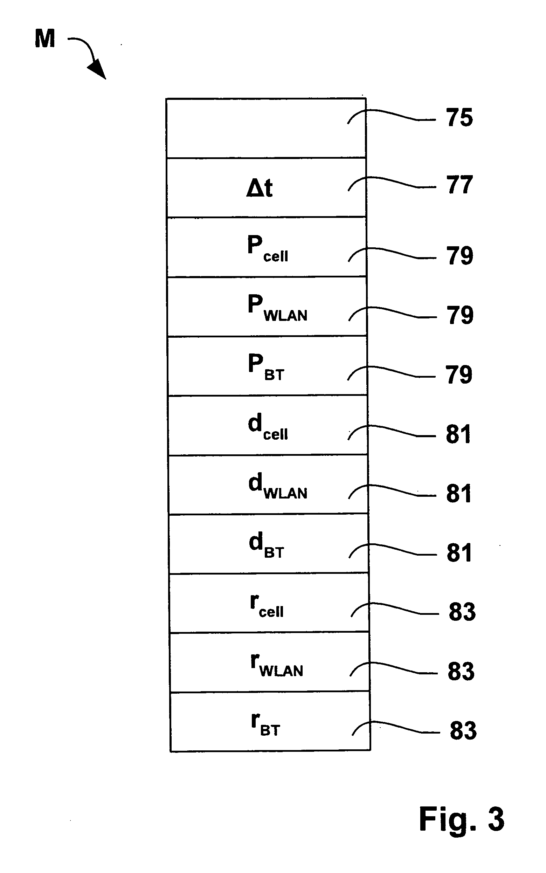

Figure 3 shows an exemplary format of the control message M. The control message M comprises a header 75 followed by a time information field 77 comprising the time information. In the shown embodiment, the time information field 77 comprises the time interval Δt. However in another embodiment, the time information field 77 may comprise the absolute time tᵤ.

The control message M comprises technology specific power limit fields 79 indicating the upper power limits P_{cell}, P_{WALN}, P_{BT} specific to different access technologies. The shown control message M has three power limit fields 79. However, in another embodiment the control message M comprises a different fixed number of power limit fields 79 in order to support a different number of wireless transmission technologies. In yet another embodiment, the number of power limit fields 79 is variable, i.e., each control message M can have an arbitrary number of power limit field 79. The power limit field 79 may even be omitted at all.

Furthermore, the control message M comprises deactivating fields 81 comprising technologies specific deactivation bits d_{cell}, d_{WLAN}, d_{BT} indicating which transmitter 31, 39 of a certain wireless transmission technology shall be deactivated during the restricted operating mode. In another embodiment the control message M has a different number of deactivation fields 81. In another embodiment the number of deactivating fields 81 can be variable or completely omitted.

In an embodiment, the control message M comprises one or more receiver deactivation fields 83, each deactivation filed 83 comprising one receiver deactivation bit r_{cell}, r_{WLAN}, r_{BT}. Indicating which receiver 33, 41 of a certain wireless transmission technology shall be deactivated.

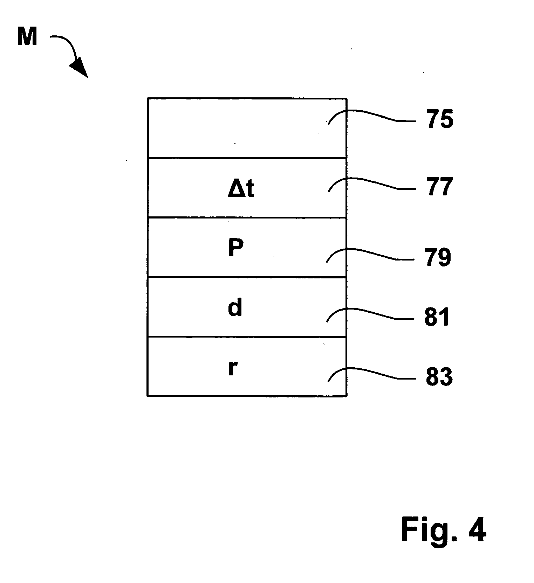

When a mobile terminal 15 receives the control message M then it switches for the time interval specified in the time information field 77 to the restricted operating mode and then returns to the unrestricted operating mode. When in the restricted operating mode, the terminal 15 limits the transmission power applied by the transmitters 31, 39 according to the information contained in the power limit fields 79. Furthermore, the terminal 15 deactivates the transmitters 31, 39 according to the information contained in the deactivating fields 81 when the terminal is in the restricted operating mode. Moreover, the terminal 15 deactivates the receivers 33, 41 according to the information contained in receiver deactivating fields 83 or automatically according to the information contained in the deactivating fields 81 for the transmitters 31, 39. According to an example, the control information included in the control message M is not specific to the radio transmission technologies. As shown in Figure 4, a control message M according to an example has only one global power limit fields 79, global deactivating field 81 and a global receiver deactivating field 81. When the terminal 15 receives this control message M then it controls all transceivers 29, 37 according to the information contained in the fields 79, 81, 83 regardless of a radio transmission technology used by these transceivers 29, 37. In particular a global transmission power limit P indicates a maximum transmission power to be used by any transmitter 31, 39 when the terminal 15 is in the restricted operating mode. A global transmitter deactivating bit d indicates to disable all transmitters 31, 39 or in combination all transmitters 31, 39 and all receivers 33, 41 when the terminal 15 is in the restricted operating mode. A global receiver deactivating bit r indicates to the terminal 15 if it shall turn off all its receivers 33, 41 while being in the restricted operating mode.

Figures 3 and 4 show a schematic diagram of the format of the control message M. When implementing the method 51, the control message format, the order of the fields 57, 77, 79, 81 may be varied. Different approaches for representation of the data included in the control message M may be applied. For example, the control message M may a binary encoded message. However, different approaches such as XML and ASN.1 may be applied.

In an embodiment, the method 51 limits the transmit power, deactivates the transmitters 31, 39 and/or deactivates the receivers 33, 41 independently from procedures for scheduling, resource control and/or resource management performed by further functions of the network 11. For instance, these further functions may determine a transmission power to be used by the terminal 15 for efficient assignment of transmission resources of the cell 25. The method 51 may instruct the terminal 25 limit the transmission power to a value less than the transmission power determined by the further functions.

The time interval specified by the value Δt or tᵤ during which the terminal 15 stays in the restricted operating mode may be more than 1 second, more preferably more than 10 seconds. In an embodiment, this time interval less than 1 day, preferably less than an hour. The time interval may be specified by the base station 13 depending on a situation and/or the area the terminal 15 residing in which shall be forced to enter the restricted operating mode. For example, in a cinema the time interval may correspond at least essentially to a duration of a movie. A begin of the time interval may be triggered for example by a film projectionist entering a duration of the film in a computer, which controls a base station 13 or an access point located in the cinema. However, for a visitor in a prison or hospital a shorter time interval may be chosen (e.g. a quarter of an hour) because the base station 13 cannot know, how long the visitor will stay in the prison or hospital. Furthermore, in an airplane the interval may correspond at least essentially to a duration of a flight. Control circuitry of the plane comprising a stored digital flight plan may trigger for example a base station 13 located in the plane to send the control message M to the terminals 15 located in the plane.

In another embodiment, the base station 13 may send the control message M to a single terminal (unicast) or to multiple terminals (multicast or broadcast) in order to make them temporally deactivate their transmitters 31, 39 and/or their receivers 33, 41 to save power. The time interval specified by the value Δt or tᵤ during which the terminal 15 stays in the restricted operating mode may be in the range from 1 ms to 10 minutes, preferably from 1 ms to 1 minute. Preferably, at least one transceiver 29, 37 or all transceivers 29, 37 of the terminal 15 are deactivated completely when in the restricted operating mode.

Temporally switching to the restricted operating mode for a comparatively short time interval (so called "micro sleep") reduces the power consumption of the terminal 15. Each time when the terminal 15 returns to the unrestricted operating mode, the base station 13 may check whether data traffic is available to be forwarded to the terminal 15. In addition, the base station 15 may give to the terminal 15 the opportunity to indicate to the base station 13 that it has pending traffic to be transmitted to the base station 13. If there is no traffic to be transmitted from the base station 13 to the terminal 15 or from the terminal 15 to the base station 13 or if the base station 13 does not allow the terminal 15 to transmit then the base station 13 may send a further control message M to the terminal 15 - preferably just after the interval specified in the last control message M has expired - in order to put the terminal 15 in the restricted operating mode again.

To sum up, the wireless communication network, in particular the base station 13 and the terminals 15 can temporally switch the terminals in the restricted operating mode to limit electromagnetic radiation of the terminal 15 and/or restrict communication. The base station 13 may be placed in an area where electromagnetic radiation is undesirable at least to some extent (e.g. hospitals) or in areas where the ability of communication of the terminals 15 shall be limited (e.g. in prisons). When a terminal 15 moves in the coverage area of such a base station 13 then it will receive the control message M transmitted by the base station 13 and switches to the restricted operating mode. When the terminal 15 leaves the coverage area of the base station 13 then it will eventually go back to the unrestricted operating mode and remaining in this unrestricted operating mode because it does not receive the control message N anymore.

## Claims

1. Method (51) for operating a wireless communication network (11), the method (51) comprising transmitting a control message (M) to a terminal (15) of the network (11) in order to change an operating mode of the terminal (15) from an unrestricted operating mode to a restricted operating mode, in said restricted operating mode a transmit power of at least one transmitter (31, 39) of the terminal (15) is reduced compared to the transmit power in said unrestricted operating mode, wherein transmitting the control message (M) comprises communicating time information (Δt, tᵤ) to the terminal (15) indicating to the terminal (15) when to change to the unrestricted operating mode, **characterized in that** the terminal (15) comprises multiple transmitters (29, 37), each of them being configured for communicating via a specific radio access technology, and **in that** transmitting the control message (M) comprises indicating to the terminal (15) to limit the transmission power of a set of the transmitters (31, 39) configured for communicating via a specific radio access technology to a radio technology specific upper power limit (P_{cell}, P_{WLAN}, P_{BT}) indicated in the control message (M).

2. Method (51) according to claim 1, wherein transmitting the control message (M) comprises indicating to the terminal (15) to deactivate the transmitter (31, 39).

3. Method (51) according to claim 1 or 2, wherein transmitting the control message (M) comprises indicating to the terminal whether to deactivate a receiver (33, 41) of the terminal (15).

4. Method (51) according to one of the precedent claims, wherein the control message (M) is originating from a base station (13) of the network (11) and transmitted by the base station (13).

5. Method (51) according to one of the precedent claims, wherein the control message (M) is transmitted by multicasting or by broadcasting and destined to multiple or all terminals (15) reachable by the base station (13).

6. Base station (13) of a wireless communication network (11), the base station comprising a transmitter (19) for transmitting a control message (M) to a terminal (15) of the network (11) in order to change an operating mode of the terminal (15) from an unrestricted operating mode to a restricted operating mode, in said restricted operating mode a transmit power of at least one transmitter (31, 39) of the terminal (15) is reduced compared to the transmit power in said unrestricted operating mode, wherein transmitting the control message (M) comprises communicating time information (Δt, tᵤ) to the terminal (15) indicating to the terminal (15) when to change to the unrestricted operating mode, **characterized in that** the terminal (15) comprises multiple transmitters (29, 37), each of them being configured for communicating via a specific radio access technology, and **in that** said control message (M) comprises indicating to the terminal (15) to limit the transmission power of a set of the transmitters (31, 39) configured for communicating via a specific radio access technology to a radio technology specific upper power limit (P_{cell}, P_{WLAN}, P_{BT}).

7. Terminal (15) of a wireless communication network (11), the terminal (15) comprising a receiver (33) for receiving a control message (M) from a base station (13) of the network (11), said control message (M) instructing the terminal (15) to change an operating mode of the terminal (15) from an unrestricted operating mode to a restricted operating mode, in said restricted operating mode a transmit power of at least one transmitter (31, 39) of the terminal (15) is reduced compared to the transmit power in said unrestricted operating mode, wherein receiving the control message (M) by the receiver (33) comprises obtaining time information (Δt, tᵤ) from the base station (13) indicating to the terminal (15) when to change to the unrestricted operating mode, **characterized in that** the terminal (15) comprises multiple transmitters (29, 37), each of them being configured for communicating via a specific radio access technology, and **in that** the terminal (15) is arranged for limiting a transmission power of a set of the transmitters to a radio technology specific upper power limit (P_{cell}, P_{WLAN}, P_{BT}) indicated in the control message (M) depending on the content (P_{cell}, P_{WLAN}, P_{BT}) of the control message (M).

8. Wireless communication network (11) comprising a base station (13) comprising a transmitter (19) for transmitting a control message (M) to a terminal (15) of the network (11) in order to change an operating mode of the terminal (15) from an unrestricted operating mode to a restricted operating mode, in said restricted operating mode a transmit power of at least one transmitter (31, 39) of the terminal (15) is reduced compared to the transmit power in said unrestricted operating mode, wherein the base station (13) is the base station (13) according to claim 6 and/or the terminal (15) is a terminal (15) according to claim 7.

## Patentansprüche

1. Verfahren (51) für den Betrieb eines drahtlosen Kommunikationsnetzwerks (11), wobei das Verfahren (51) das Übertragen einer Steuerungsnachricht (M) an ein Endgerät (15) des Netzwerks (11) umfasst, um einen Betriebsmodus des Endgeräts (15) von einem unbeschränkten Betriebsmodus in einen beschränkten Betriebsmodus zu ändern, wobei in dem besagten beschränkten Betriebsmodus eine Sendeleistung mindestens eines Senders (31, 39) des Endgeräts (15) im Vergleich zu der Sendeleistung in dem besagten unbeschränkten Betriebsmodus verringert wird, wobei das Übertragen der Steuerungsnachricht (M) das Übermitteln von Zeitinformationen (Δt, tᵤ) an das Endgerät (15), welche dem Endgerät (15) anzeigen, wann es in den unbeschränkten Betriebsmodus umschalten soll, umfasst, **dadurch gekennzeichnet, dass** das Endgerät (15) mehrere Sender (29, 37) umfasst, von denen ein jeder für das Kommunizieren über eine spezifische Funkzugangstechnologie konfiguriert ist, und dass das Übertragen der Steuerungsnachricht (M) das Anweisen des Endgeräts (15), die Sendeleistung eines Satzes von Sendern (31, 39), welche für das Kommunizieren über eine spezifische Funkzugangstechnologie konfiguriert sind, auf eine in der Steuerungsnachricht (M) angegebene funktechnologiespezifische obere Leistungsgrenze (P_{cell}, P_{WLAN}, P_{BT}) zu begrenzen, umfasst.

2. Verfahren (51) nach Anspruch 1, wobei das Übertragen der Steuerungsnachricht (M) das Anweisen des Endgeräts (15), den Sender (31, 39) zu deaktivieren, umfasst.

3. Verfahren (51) nach Anspruch 1 oder 2, wobei das Übertragen der Steuerungsnachricht (M) das Anzeigen an das Endgerät, ob es einen Empfänger (33, 41) des Endgeräts (15) deaktivieren soll, umfasst.

4. Verfahren (51) nach einem der vorstehenden Ansprüche, wobei die Steuerungsnachricht (M) von einer Basisstation (13) des Netzwerks (11) stammt und von der Basisstation (13) übertragen wird.

5. Verfahren (51) nach einem der vorstehenden Ansprüche, wobei die Steuerungsnachricht (M) durch Multicasting oder durch Broadcasting übertragen wird und für mehrere oder alle von der Basisstation (13) erreichbare Endgeräte (15) bestimmt ist.

6. Basisstation (13) eines drahtlosen Kommunikationsnetzwerks (11), wobei die Basisstation einen Sender (19) für die Übertragung einer Steuerungsnachricht (M) an ein Endgerät (15) des Netzwerks (11) umfasst, um einen Betriebsmodus des Endgeräts (15) von einem unbeschränkten Betriebsmodus in einen beschränkten Betriebsmodus zu ändern, wobei in dem besagten beschränkten Betriebsmodus eine Sendeleistung mindestens eines Senders (31, 39) des Endgeräts (15) im Vergleich zu der Sendeleistung in dem besagten unbeschränkten Betriebsmodus verringert wird, wobei das Übertragen der Steuerungsnachricht (M) das Übermitteln von Zeitinformationen (Δt, tᵤ) an das Endgerät (15), welche dem Endgerät (15) anzeigen, wann es in den unbeschränkten Betriebsmodus umschalten soll, umfasst, **dadurch gekennzeichnet, dass** das Endgerät (15) mehrere Sender (29, 37) umfasst, von denen ein jeder für das Kommunizieren über eine spezifische Funkzugangstechnologie konfiguriert ist, und dass die Steuerungsnachricht (M) das Anweisen des Endgeräts (15), die Sendeleistung eines Satzes von Sendern (31, 39), welche für das Kommunizieren über eine spezifische Funkzugangstechnologie konfiguriert sind, auf eine funktechnologiespezifische obere Leistungsgrenze (P_{cell}. P_{WLAN}, P_{BT}) zu begrenzen, umfasst.

7. Endgerät (15) eines drahtlosen Kommunikationsnetzwerks (11), wobei das Endgerät (15) einen Empfänger (33) für den Empfang einer Steuerungsnachricht (M) von einer Basisstation (13) des Netzwerks (11) umfasst, wobei die besagte Steuerungsnachricht (M) das Endgerät (15) anweist, einen Betriebsmodus des Endgeräts (15) von einem unbeschränkten Betriebsmodus in einen beschränkten Betriebsmodus zu ändern, wobei in dem besagten beschränkten Betriebsmodus eine Sendeleistung mindestens eines Senders (31, 39) des Endgeräts (15) im Vergleich zu der Sendeleistung in dem besagten unbeschränkten Betriebsmodus verringert wird, wobei das Empfangen der Steuerungsnachricht (M) an dem Empfänger (33) das Erhalten von Zeitinformationen (Δt, tᵤ) von der Basisstation (13), welche dem Endgerät (15) anzeigen, wann es in den unbeschränkten Betriebsmodus umschalten soll, umfasst, **dadurch gekennzeichnet, dass** das Endgerät (15) mehrere Sender (29, 37) umfasst, von denen ein jeder für das Kommunizieren über eine spezifische Funkzugangstechnologie konfiguriert ist, und dass das Endgerät (15) für das Begrenzen einer Sendeleistung eines Satzes der Sender auf eine in der Steuerungsnachricht (M) angegebene funktechnologiespezifische obere Leistungsgrenze (P_{cell}, P_{WLAN}, P_{BT}) in Abhängigkeit von dem Inhalt (P_{cell}, P_{WLAN}, P_{BT}) der Steuerungsnachricht (M) ausgelegt ist.

8. Drahtloses Kommunikationsnetzwerk (11), umfassend eine Basisstation (13), welche einen Sender (19) für die Übertragung einer Steuerungsnachricht (M) an ein Endgerät (15) des Netzwerks (11) umfasst, um einen Betriebsmodus des Endgeräts (15) von einem unbeschränkten Betriebsmodus in einen beschränkten Betriebsmodus zu ändern, wobei in dem besagten beschränkten Betriebsmodus eine Sendeleistung mindestens eines Senders (31, 39) des Endgeräts (15) im Vergleich zu der Sendeleistung in dem besagten unbeschränkten Betriebsmodus verringert wird, wobei die Basisstation (13) die Basisstation (13) gemäß Anspruch 6 ist und/oder das Endgerät (15) ein Endgerät (15) gemäß Anspruch 7 ist.

## Revendications

1. Procédé (51) de fonctionnement d'un réseau de communication sans fil (11), le procédé (51) consistant à transmettre un message de commande (M) à un terminal (15) du réseau (11) afin de faire passer un mode de fonctionnement du terminal (15) d'un mode de fonctionnement non-restreint à un mode de fonctionnement restreint, dans ledit mode de fonctionnement restreint une puissance d'émission d'au moins un émetteur (31, 39) du terminal (15) est réduite par rapport à la puissance d'émission dans ledit mode de fonctionnement non-restreint, dans lequel la transmission du message de commande (M) consiste à communiquer des informations de temps (Δt, tᵤ) au terminal (15) indiquant au terminal (15) le moment de passer en mode de fonctionnement non-restreint, **caractérisé en ce que** le terminal (15) comprend des émetteurs multiples (29, 37), chacun d'eux étant configuré pour communiquer par l'intermédiaire d'une technologie d'accès radio spécifique, et **en ce que** la transmission du message de commande (M) consiste à indiquer au terminal (15) de limiter la puissance d'émission d'un ensemble des émetteurs (31, 39) configurés pour communiquer par l'intermédiaire d'une technologie d'accès radio spécifique à une limite de puissance supérieure spécifique de la technologie radio (P_{cell,} P_{WLAN}, P_{BT}) indiquée dans le message de commande (M).

2. Procédé (51) selon la revendication 1, dans lequel la transmission du message de commande (M) consiste à indiquer au terminal (15) de désactiver l'émetteur (31, 39).

3. Procédé (51) selon la revendication 1 ou 2, dans lequel la transmission du message de commande (M) consiste à indiquer au terminal s'il faut désactiver ou non un récepteur (33, 41) du terminal (15).

4. Procédé (51) selon l'une des revendications précédentes, dans lequel le message de commande (M) provient d'une station de base (13) du réseau (11) et est transmis par la station de base (13).

5. Procédé (51) selon l'une des revendications précédentes, dans lequel le message de commande (M) est transmis par multidiffusion ou par diffusion et est destiné à plusieurs terminaux ou à tous les terminaux (15) accessibles par la station de base (13).

6. Station de base (13) d'un réseau de communication sans fil (11), la station de base comprenant un émetteur (19) pour transmettre un message de commande (M) à un terminal (15) du réseau (11) afin de faire passer un mode de fonctionnement du terminal (15) d'un mode de fonctionnement non-restreint à un mode de fonctionnement restreint, dans ledit mode de fonctionnement restreint une puissance d'émission d'au moins un émetteur (31, 39) du terminal (15) est réduite par rapport à la puissance d'émission dans ledit mode de fonctionnement non-restreint, dans laquelle la transmission du message de commande (M) consiste à communiquer des informations de temps (Δt, tᵤ) au terminal (15) indiquant au terminal (15) le moment de passer en mode de fonctionnement non-restreint, **caractérisée en ce que** le terminal (15) comprend des émetteurs multiples (29, 37), chacun d'eux étant configuré pour communiquer par l'intermédiaire d'une technologie d'accès radio spécifique, et **en ce que** ledit message de commande (M) consiste à indiquer au terminal (15) de limiter la puissance d'émission d'un ensemble des émetteurs (31, 39) configurés pour communiquer par l'intermédiaire d'une technologie d'accès radio spécifique à une limite de puissance supérieure spécifique de la technologie radio (P_{cell}, P_{WLAN}, P_{BT}).

7. Terminal (15) d'un réseau de communication sans fil (11), le terminal (15) comprenant un récepteur (33) pour recevoir un message de commande (M) à partir d'une station de base (13) du réseau (11), ledit message de commande (M) indiquant au terminal (15) de faire passer un mode de fonctionnement du terminal (15) d'un mode de fonctionnement non-restreint à un mode de fonctionnement restreint, dans ledit mode de fonctionnement restreint une puissance d'émission d'au moins un émetteur (31, 39) du terminal (15) est réduite par rapport à la puissance d'émission dans ledit mode de fonctionnement non-restreint, dans lequel la réception du message de commande (M) par le récepteur (33) consiste à obtenir des informations de temps (Δt, tᵤ) de la station de base (13) indiquant au terminal (15) le moment de passer en mode de fonctionnement non-restreint, **caractérisé en ce que** le terminal (15) comprend des émetteurs multiples (29, 37), chacun d'eux étant configuré pour communiquer par l'intermédiaire d'une technologie d'accès radio spécifique, et **en ce que** le terminal (15) est conçu pour limiter une puissance d'émission d'un ensemble des émetteurs à une limite de puissance supérieure spécifique de la technologie radio (P_{cell}, P_{WLAN}, P_{BT}) indiquée dans le message de commande (M) en fonction du contenu (P_{cell}, P_{WLAN}, P_{BT}) du message de commande (M).

8. Réseau de communication sans fil (11) comprenant une station de base (13) comprenant un émetteur (19) pour transmettre un message de commande (M) à un terminal (15) du réseau (11) afin de faire passer un mode de fonctionnement du terminal (15) d'un mode de fonctionnement non-restreint à un mode de fonctionnement restreint, dans ledit mode de fonctionnement restreint une puissance d'émission d'au moins un émetteur (31, 39) du terminal (15) est réduite par rapport à la puissance d'émission dans ledit mode de fonctionnement non-restreint, dans lequel la station de base (13) est la station de base (13) selon la revendication 6 et/ou le terminal (15) est un terminal (15) selon la revendication 7.
